# EUROPEAN PATENT SPECIFICATION

(11) **EP 1 428 042 B1**
(45) Date of publication and mention of the grant of the patent: **31.07.2013**
(21) Application number: 02744048.6
(22) Date of filing: 26.06.2002
(51) Int. Cl.: G01S 7/04

(54) **METHOD AND DEVICE FOR DISPLAYING OBJECTS**
VERFAHREN UND EINRICHTUNG ZUM ANZEIGEN VON OBJEKTEN
PROCEDE ET DISPOSITIF D'AFFICHAGE D'OBJETS

(30) Priority: 22.08.2001 SE 0102796
(43) Date of publication of application: 16.06.2004
(73) Proprietor: SAAB AB, 581 88 Linköping (SE)
(72) Inventor: EKSTRÖM, Häkan, S-590 54 Sturefors (SE)
(74) Representative: Holmberg, Magnus
(86) International application number: PCT/SE2002/001269
(87) International publication number: WO 2003/019225

(56) References cited:
- EP-A1- 0 411 309
- EP-A2- 0 405 430
- US-A- 5 057 835
- US-A- 5 257 347
- US-A- 5 461 571
- US-A- 5 798 713

## Description

### TECHNICAL AREA

The invention concerns a method for displaying surrounding objects on a display surface. The invention also concerns a device for use in an aircraft to display objects surrounding said aircraft. Using the method and device according to the invention, a first number of objects within selected geographic surroundings is displayed in perspective on the display surface.

### STATE OF THE ART

Visual display systems are used to provide an operator, such as a pilot in an airplane, with information concerning what is happening in the surrounding airspace. One such display system is a perspective display, which consists of a display screen on which a perspective view of the surroundings is displayed. The perspective display is a two-dimensional representation of three-dimensional surroundings. By allowing, e.g. a grid of boxes or points to represent a third dimension on the two-dimensional display surface, a display is created in perspective. One such perspective display is known from, e.g. US 5,257,347, which describes a method and device for generating a perspective representation of surrounding terrain on a two-dimensional display surface.

In a known type of perspective display, objects in the external surroundings are displayed in a way that enables the pilot to form a conception as to his own position relative to external objects by viewing himself from a chosen perspective. Furthermore, objects in the external surroundings can be displayed on a basis of varying size in the field of view, which enables the pilot to obtain an overview of his flight status, or to focus on a limited part of the external surroundings.

In a perspective display, the extent of the perspective is limited horizontally, vertically and in depth. Information about objects located outside of the range of visibility must come from other types of indicators. The limitations of the perspective display entail that the pilot must shift his attention between indicators in order to stay updated regarding his situation vis-a-vis the external surroundings. Since a pilot in a combat aircraft has a multiplicity of instruments in his field of view, this means that it must be easy for him to interpret the instrument readings on displays, and easy to convert those readings into his visualization of his surroundings and his spatial conception. Forcing a pilot to frequently shift his attention among different display types and simultaneously convert data in such an environment can result in a poor overall awareness of his external surroundings.

### DESCRIPTION OF THE INVENTION

The object of the invention is to provide a display system that eliminates the aforementioned problems. In the display method according to the invention, a display surface on a perspective display is used to present a first number of objects within predetermined geographical surroundings. The display is presented from a chosen perspective. Objects that are located outside of the selected geographic surroundings, but within a predetermined distance, are represented by symbols in a frame on the periphery of said display surface. The placements of the objects in this frame provide a two-dimensional representation of the actual positions of the objects.

In a preferred embodiment of the invention, the frame is surrounding the perspective display.

In an embodiment of the invention, the objects are displayed as symbols in the frame. These symbols can be designed so that the nearby objects are displayed most prominently.

In a preferred embodiment of the invention, the symbols are disposed in a manner consistent with their directions, which means that symbols placed in the upper half of the frame are located in front of the object of the user, while symbols placed in the lower half are located behind said object.

The invention also concerns a device for use in an aircraft to display objects surrounding said aircraft. The device comprises a display surface on which a perspective view of selected geographic surroundings is displayed. A frame on the periphery of the display surface represents a chosen environment outside of said geographic surroundings.

In an embodiment of the invention, said frame is semi-transparent and superimposed over the perspective view.

The superimposition of information provides a user-friendly display using two-dimensional information in a perspective view. The pilot thereby avoids having to shift his attention between separate screen displays, and is thus better able to maintain his conception of the positions of other objects in relation to his own, regardless of whether or not they are visible in the perspective view. This enables the pilot to focus his attention, and thereby increases his awareness of the situation.

### BRIEF DESCRIPTION OF FIGURES

- Figure 1: Shows the display system according to the invention in a first perspective.
- Figure 2: Shows the display system according to the invention in a second perspective.
- Figure 3: Shows symbols for objects, and overlapping among same.

### PREFERRED EMBODIMENTS

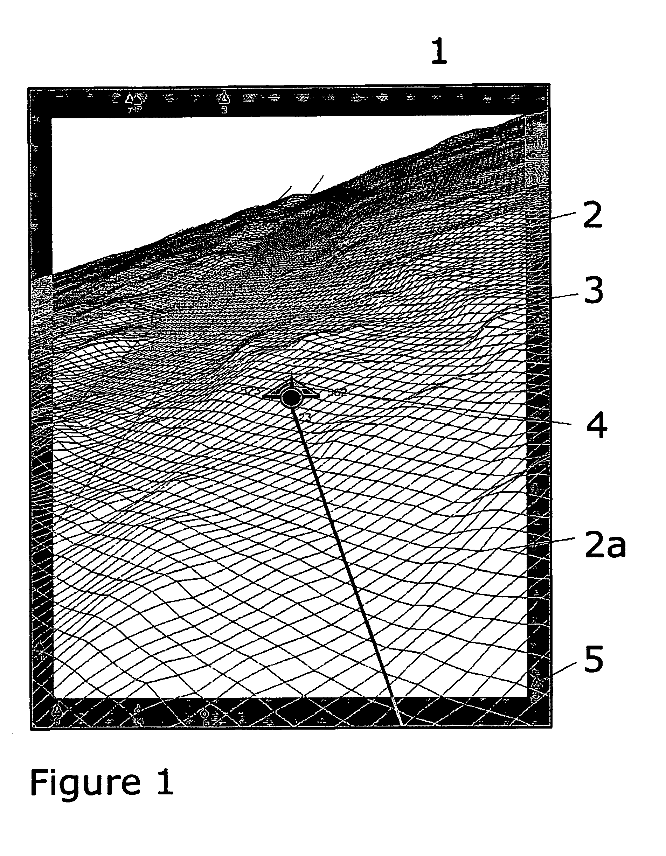

Figure 1 shows a display surface 1 according to the invention with a perspective view 2 and a surrounding frame 3. The midpoint of the display surface 1 consists of a user symbol 4 that represents the aircraft of the user.

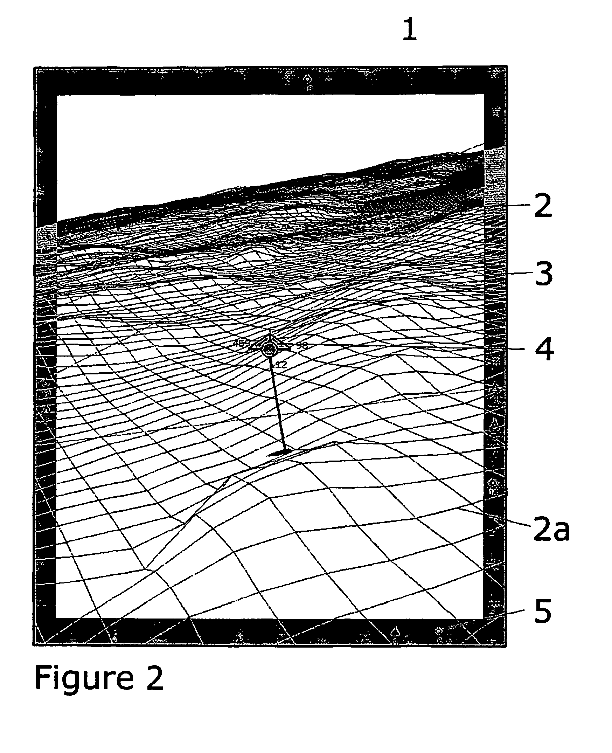

The perspective view 2 is achieved via a grid 2a, which represents the third dimension. The position of the aircraft of the user is identified by a user symbol 4 at the center of the perspective view 2. The perspective can be changed by scaling the grid up or down. Other perspective view options relative to that of the user are of course possible. Figure 2 shows a second perspective in which the surroundings being displayed in perspective view has been reduced by changing the viewing scale. It is also possible to utilize a larger portion of the view to provide a display in any direction relative to the aircraft.

The perspective display provides a visualization of the position of the aircraft of the user in relation to external objects and the surroundings. In the embodiment shown in the figure, parameters that provide additional information about the speed, altitude and direction of the aircraft of the user are also displayed.

The frame 3 is arranged on the periphery of the perspective view 2. In the embodiments shown, the frame 3 extends uninterrupted around the entire perspective view. The frame can also be interrupted so that one or more fields are created on the periphery of the perspective view. This embodiment may be relevant in connection with target tracking, when information in the direction of flight of the aircraft is of primary relevance.

In the embodiments shown in figures 1 and 2, the frame is semi-transparent and partially overlaps the perspective view. The frame can of course also surround the perspective view without overlapping it, whereupon the frame 3 can encompass the entire view. Alternatively, the frame can be delimited from the perspective view 2 by only a contour line. The frame can then be made transparent. The frame is rectangular in the embodiments shown in figures 1 and 2. This shape is adapted to the shape of the display so that the frame conforms to the edge of the perspective display regardless of whatever geometric shape it may have.

The scale of the frame can be adjusted to that of the perspective view. If the selected perspective is changed, then the scale of the frame can be adjusted accordingly. The perspective view showed in Figure 1 mirrors more extensive geographical surroundings than is the case for the perspective view shown in Figure 2. The scale of the frame in Figure 1 should then be larger than the scale used for the frame in Figure 2.

A number of symbols 5 are displayed in the semi-transparent frame, which symbols represent aircraft or targets located outside the field of view of the displayed perspective view. The positions of the symbols 5 in the frame 3 are calculated based on the rectangular shape of the frame and the angle of bearing between the object of the user and objects in the external surroundings. If a symbol 5 is located in the upper half of the frame 3, then the object is located in front of the aircraft of the user. The opposite applies if the symbol is located in the lower half of the frame 3.

In the embodiments shown in figures 1 and 2, the symbols 5 are supplemented with an altitude reading that indicates the altitude in meters or thousands of meters. Information concerning range or a combination of altitude and range is also possible. However, it is important that the information be limited so that its clarity and ease of overall comprehension are not lost. In those cases where a plurality of symbols 5 are positioned near to one another, the symbols 5 for those aircraft that are most remote can be toned down so that the most proximate aircraft stand out better.

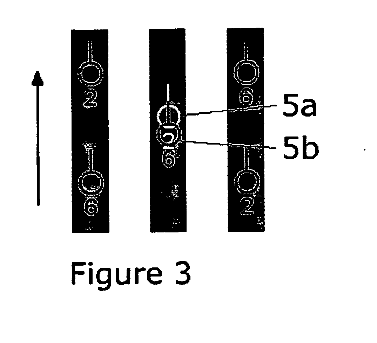

When a plurality of objects or aircraft have a directional relationship within a degree of one another, the symbol 5 for the object that is closest to the aircraft of the user is given priority. This symbol 5 maintains its black coloration while the other symbols are simultaneously shaded or made less prominent by some other means. This produces a better display and provides a guide as to the distance interrelationships among the aircraft. Figure 3 shows an overlap between two symbols, 5a and 5b. The object at an altitude of 6000 meters is closer than the object at an altitude of 2000 meters, which means that symbol 5a is dimmed by the overlap.

The method and device according to the invention improve the ability of the pilot to maintain his conception of the positions of other objects in relation to his own, regardless of whether or not they are visible in a perspective view, and without the need to glance at other instrumentation in order to update his knowledge concerning said objects. This enables the pilot to focus his attention, and thereby increase his awareness of the situation.

## Claims

1. A method for displaying surrounding objects of an aircraft of user on a display surface (1) in said aircraft, wherein a first number of objects within selected geographic surroundings is displayed in a perspective view (2) on the display surface, **characterized in that** the aircraft of the user is identified by a user symbol (4) at the center of the perspective view (2), wherein a second number of objects in a selected environment outside of said geographic surroundings, but within a predetermined distance, is represented by symbols (5) in a frame (3) on the periphery of said display surface (1), the frame (3) being a representation of said selected environment, whereupon placements of the symbols (5) in the frame (3) provide a two-dimensional representation of the actual positions of the second number of objects and wherein a symbol placed in the upper half of the frame represents an object that is in front of the aircraft of the user and a symbol placed in the lower half of the frame represents an object that is located behind said aircraft.

2. A method according to claim 1, **characterized in that** the symbols (5) are designed so that the nearest objects are displayed most prominently.

3. A method according claim 1, **characterized in that** the symbols (5) are disposed in a manner consistent with their directions.

4. A device used in an aircraft of a user to display objects surrounding said aircraft, wherein a first number of objects within selected geographic surroundings is displayed in a perspective view (2) on a display surface (1), **characterized by** the aircraft of the user is identified by a user symbol (4) at the center of the perspective view (2), a frame (3) on the periphery of said display surface (1), which frame (3) is a representation of a selected environment outside of said geographic surroundings, but within a predetermined distance, and symbols (5) in the frame, which symbols (5) represent a second number of objects in the selected environment, whereupon the placements of the symbols (5) in the frame (3) provide a two dimensional representation of the actual positions of the second number of objects, and wherein a symbol placed in the upper half of the frame represents an object that is in front of the aircraft of the user and a symbol placed in the lower half of the frame represents an object that is located behind said aircraft.

5. A device according to claim 4, **characterized in that** the frame (3) being semi-transparent and superimposed over the perspective view (2).

## Patentansprüche

1. Verfahren zum Anzeigen umgebender Objekte eines Flugzeugs eines Benutzers an einer Anzeigefläche (1) in dem Flugzeug, wobei eine erste Anzahl von Objekten innerhalb einer ausgewählten geografischen Umgebung in einer Perspektivansicht (2) an der Anzeigefläche angezeigt wird,
**dadurch gekennzeichnet, dass** das Flugzeug des Benutzers anhand eines Benutzer-Symbols (4) in der Mitte der Perspektivansicht (2) identifiziert wird, und eine zweite Anzahl von Objekten in einem ausgewählten Umkreis außerhalb der geografischen Umgebung, jedoch innerhalb eines vorgegebenen Abstandes, mit Symbolen (5) in dem Rahmen (3) an dem Rand der Anzeigefläche (1) dargestellt wird, wobei der Rahmen (3) eine Darstellung der ausgewählten Umgebung ist und Stellungen der Symbole (5) in dem Rahmen (3) eine zweidimensionale Darstellung der tatsächlichen Positionen der zweiten Anzahl von Objekten schaffen, ein in der oberen Hälfte des Rahmens angeordnetes Symbol ein Objekt darstellt, das sich vor dem Flugzeug des Benutzers befindet, und ein in der unteren Hälfte des Rahmens angeordnetes Symbol ein Objekt darstellt, das sich hinter dem Flugzeug befindet.

2. Verfahren nach Anspruch 1, **dadurch gekennzeichnet, dass** die Symbole (5) so gestaltet sind, dass die nächstliegenden Objekte am stärksten hervorgehoben angezeigt werden.

3. Verfahren nach Anspruch 1, **dadurch gekennzeichnet, dass** die Symbole (5) entsprechend ihren Richtungen angeordnet sind.

4. Vorrichtung, die in einem Flugzeug eines Benutzers eingesetzt wird, um das Flugzeug umgebende Objekte anzuzeigen, wobei eine erste Anzahl von Objekten innerhalb einer ausgewählten geografischen Umgebung in einer Perspektivansicht (2) an der Anzeigefläche angezeigt wird,
**gekennzeichnet dadurch, dass** das Flugzeug des Benutzers anhand eines Benutzer-Symbols (4) in der Mitte der Perspektivansicht (2) identifiziert wird, durch einen Rahmen (3) am Rand der Anzeigefläche (1), wobei der Rahmen (3) eine Darstellung eines ausgewählten Umkreises außerhalb der geografischen Umgebung, jedoch innerhalb eines vorgegebenen Abstandes, ist, und durch Symbole (5) in dem Rahmen (3), wobei die Symbole (5) eine zweite Anzahl von Objekten in der ausgewählten Umgebung darstellen, die Stellungen der Symbole (5) in dem Rahmen (3) eine zweidimensionale Darstellung der tatsächlichen Positionen der zweiten Anzahl von Objekten schaffen, ein in der oberen Hälfte des Rahmens angeordnetes Symbol ein Objekt darstellt, das sich vor dem Flugzeug des Benutzers befindet, und ein in der unteren Hälfte des Rahmens angeordnetes Symbol ein Objekt darstellt, das sich hinter dem Flugzeug befindet.

5. Vorrichtung nach Anspruch 4, **dadurch gekennzeichnet, dass** der Rahmen (3) halbtransparent ist und auf die Perspektivansicht (2) aufgelegt ist.

## Revendications

1. Procédé d'affichage d'objets voisins d'un avion d'un utilisateur sur une surface d'affichage (1) dans ledit avion, dans lequel des premiers objets situés dans des zones géographiques avoisinantes données sont affichés sur une vue en perspective (2) sur la surface d'affichage, **caractérisé en ce que** l'avion de l'utilisateur est identifié par un symbole utilisateur (4) au centre de la vue en perspective (2), dans lequel des seconds objets situés dans un environnement sélectionné à l'extérieur desdites zones géographiques avoisinantes, mais à une distance prédéfinie, sont représentés par des symboles (5) dans un cadre (3) à la périphérie de ladite surface d'affichage (1), le cadre (3) étant une représentation dudit environnement sélectionné, le positionnement des symboles (5) dans le cadre (3) fournissant une représentation bidimensionnelle des positions réelles des seconds objets, un symbole placé dans la moitié supérieure du cadre représentant un objet qui se trouve devant l'avion de l'utilisateur et un symbole placé dans la moitié inférieure du cadre représentant un objet qui se situe derrière ledit avion.

2. Procédé selon la revendication 1, **caractérisé en ce que** les symboles (5) sont conçus de telle sorte que les objets les plus proches s'affichent de la manière la plus visible.

3. Procédé selon la revendication 1, **caractérisé en ce que** les symboles (5) sont disposés d'une manière correspondant à leurs directions.

4. Dispositif utilisé dans un avion d'un utilisateur pour afficher des objets entourant ledit avion, dans lequel des premiers objets situés dans des zones géographiques avoisinantes données sont affichés sur une vue en perspective (2) sur une surface d'affichage (1), **caractérisé en ce que** l'avion de l'utilisateur est identifié par un symbole d'utilisateur (4) au centre de la vue en perspective (2), un cadre (3) à la périphérie de ladite surface d'affichage (1) étant une représentation d'un environnement sélectionné à l'extérieur desdites zones géographiques avoisinantes, mais à une distance prédéfinie, et des symboles (5) dans le cadre, représentant des seconds objets dans l'environnement sélectionné, le positionnement des symboles (5) dans le cadre (3) fournissant une représentation bidimensionnelle des positions réelles des seconds objets, un symbole placé dans la moitié supérieure du cadre représentant un objet qui se trouve devant l'avion de l'utilisateur et un symbole placé dans la moitié inférieure du cadre représentant un objet qui se situe derrière ledit avion.

5. Dispositif selon la revendication 4, **caractérisé en ce que** le cadre (3) est semi-transparent et superposé sur la vue en perspective (2).
